# EUROPEAN PATENT APPLICATION

(11) **EP 3 934 321 A1**
(43) Date of publication of application: **05.01.2022**
(21) Application number: 19927220.4
(22) Date of filing: 30.04.2019
(51) Int. Cl.: H04W 36/00

(54) **METHOD AND DEVICE FOR CELL HANDOVER**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LU, Qianxi, Dongguan, Guangdong 523860 (CN)
(74) Representative: Taor, Simon Edward William
(86) International application number: PCT/CN2019/085100
(87) International publication number: WO 2020/220238

(57) **Abstract**

The present disclosure provides a method and a device for cell handover, and a method for a terminal device to establish a PDCP entity during a handover process. The method includes: establishing a first Packet Data Convergence Protocol (PDCP) entity, the first PDCP entity being configured for communication between a terminal device and a target cell base station; and releasing a second PDCP entity, the second PDCP entity being configured for communication between the terminal device and a source cell base station. Time at which the second PDCP entity is released is not earlier than time at which the first PDCP entity is established.

## Description

### TECHNICAL FIELD

The embodiments of the present disclosure relates to communication technology, and more particularly, to a method and a device for cell handover.

### BACKGROUND

The New Radio (NR) system supports cell handover. For example, when a terminal device moves from one cell to another, or due to wireless communication traffic load adjustment, activation of operation and maintenance, device failure, etc., in order to ensure the continuity of communication and the quality of service, it is required to transfer a communication link between the terminal device and a source base station to a target base station, i.e., to perform a handover process.

In the process of handover from the source base station to the target base station, the terminal device will establish a corresponding Packet Data Convergence Protocol (PDCP) for all bearers. How to establish the PDCP by the terminal device has become a problem to be solved.

### SUMMARY

The present disclosure provides a method and a device for cell handover, and a method for a terminal device to establish a PDCP entity during a handover process.

In a first aspect, a method for cell handover is provided. The method includes: establishing a first Packet Data Convergence Protocol (PDCP) entity, the first PDCP entity being configured for communication between a terminal device and a target cell base station; and releasing a second PDCP entity, the second PDCP entity being configured for communication between the terminal device and a source cell base station. Time at which the second PDCP entity is released is not earlier than time at which the first PDCP entity is established.

In a second aspect, a method for cell handover is provided. The method includes: releasing a second Packet Data Convergence Protocol (PDCP) entity. The second PDCP entity is configured for communication between a source cell base station and a terminal device. Time at which the second PDCP entity is released is not earlier than time at which a first PDCP entity is established by the terminal device. The first PDCP entity is configured for communication between the terminal device and a target cell base station.

In a third aspect, a method for cell handover is provided. The method includes: establishing a first Packet Data Convergence Protocol (PDCP) entity. The first PDCP entity is configured for communication between a target cell base station and a terminal device. Time at which the first PDCP entity is established is not later than time at which a second PDCP entity is released by the terminal device. The second PDCP entity is configured for communication between the terminal device and a source cell base station.

In a fourth aspect, a terminal device is provided. The terminal device is configured to perform the method according to the above first aspect or any implementation thereof.

In particular, the terminal device includes one or more functional modules for performing the method according to the above first aspect or any implementation thereof.

In a fifth aspect, a network device is provided. The network device is configured to perform the method according to the above second aspect or any implementation thereof.

In particular, the network device includes one or more functional modules for performing the method according to the above second aspect or any implementation thereof.

In a sixth aspect, a network device is provided. The network device is configured to perform the method according to the above third aspect or any implementation thereof.

In particular, the network device includes one or more functional modules for performing the method according to the above third aspect or any implementation thereof.

In a seventh aspect, a terminal device is provided. The terminal device includes a processor and a memory. The memory is configured to store a computer program, and the processor is configured to invoke and execute the computer program stored in the memory to perform the method according to the above first aspect or any implementation thereof.

In an eighth aspect, a network device is provided. The network device includes a processor and a memory. The memory is configured to store a computer program, and the processor is configured to invoke and execute the computer program stored in the memory to perform the method according to the above second aspect or any implementation thereof.

In a ninth aspect, a network device is provided. The network device includes a processor and a memory. The memory is configured to store a computer program, and the processor is configured to invoke and execute the computer program stored in the memory to perform the method according to the above third aspect or any implementation thereof.

In a tenth aspect, an apparatus is provided. The apparatus is configured to perform the method according to any of the above first to third aspects or any implementation thereof.

In particular, the apparatus includes a processor configured to invoke and execute a computer program from a memory, to cause a device provided with the apparatus to perform the method according to any of the above first to third aspects or any implementation thereof.

In an eleventh aspect, a computer-readable storage medium is provided. The computer-readable storage medium stores a computer program configured to cause a computer to perform the method according to any of the above first to third aspects or any implementation thereof.

In a twelfth aspect, a computer program product is provided. The computer program product includes computer program instructions configured to cause a computer to perform the method according to any of the above first to third aspects or any implementation thereof.

In a thirteenth aspect, a computer program is provided. The computer program, when executed by a computer, causes the computer to perform the method according to any of the above first to third aspects or any implementation thereof.

With the above technical solutions, a terminal device can establish a target PDCP entity during a cell handover process, such that establishment of PDCP by the terminal device can satisfy handover interrupt time of Oms.

### BRIEF DESCRIPTION OF DRAWINGS

FIG. 1 is a schematic diagram of a wireless communication system in which an embodiment of the present disclosure can be applied.
FIG. 2 is a schematic diagram of a contention-based random access procedure according to an embodiment of the present disclosure.
FIG. 3 is a schematic diagram of a non-contention-based random access procedure according to an embodiment of the present disclosure.
FIG. 4 is a schematic diagram of a cell handover method according to an embodiment of the present disclosure.
FIG. 5 is a schematic flowchart illustrating a method for cell handover according to an embodiment of the present disclosure.
FIG. 6 is a schematic flowchart illustrating another method for cell handover according to an embodiment of the present disclosure.
FIG. 7 is a schematic flowchart of another method for cell handover according to an embodiment of the present disclosure.
FIG. 8 is a schematic diagram of a PDCP entity established by a terminal device according to an embodiment of the present disclosure.
FIG. 9 is a schematic diagram of a process of establishing a PDCP entity by a terminal device according to an embodiment of the present disclosure.
FIG. 10 is a schematic diagram of a data transmission by a terminal device according to an embodiment of the present disclosure.
FIG. 11 is a schematic diagram of another data transmission by a terminal device according to an embodiment of the present disclosure.
FIG. 12 is a schematic diagram of a process of releasing a PDCP entity by a terminal device according to an embodiment of the present disclosure.
FIG. 13 is a schematic diagram of a process of establishing a PDCP entity by a terminal device according to an embodiment of the present disclosure.
FIG. 14 is a schematic block diagram of a terminal device according to an embodiment of the present disclosure.
FIG. 15 is a schematic block diagram of a network device according to an embodiment of the present disclosure.
FIG. 16 is a schematic block diagram of another network device according to an embodiment of the present disclosure.
FIG. 17 is a schematic diagram showing a structure of a communication device according to an embodiment of the present disclosure.
FIG. 18 is a schematic diagram showing a structure of an apparatus according to an embodiment of the present disclosure.
FIG. 19 is a schematic block diagram of a communication system according to an embodiment of the present disclosure.

### DESCRIPTION OF EMBODIMENTS

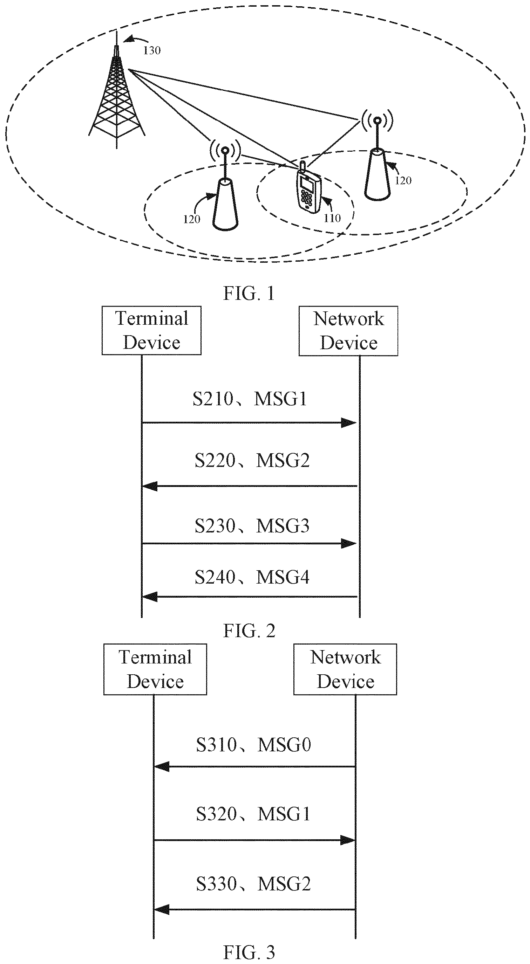

FIG. 1 is a schematic diagram of a system 100 according to an embodiment of the present disclosure.

As shown in FIG. 1, a terminal device 110 is connected to a first network device 130 in a first communication system and a second network device 120 in a second communication system. For example, the first network device 130 may be a network device in Long Term Evolution (LTE), and the second network device 120 may be a network device in New Radio (NR).

Here, the first network device 130 and the second network device 120 may each include a plurality of cells.

It can be appreciated that FIG. 1 is an example of a communication system according to an embodiment of the present disclosure, and the embodiment of the present disclosure is not limited to the communication system shown in FIG. 1.

As an example, the communication system to which the embodiment of the present disclosure can be applied may include at least a plurality of network devices in the first communication system and/or a plurality of network devices in the second communication system.

For example, the system 100 shown in FIG. 1 may include one primary network device in the first communication system and at least one secondary network device in the second communication system. Each of the at least one secondary network device is connected to the one primary network device to form multi-connectivity, and is connected to the terminal device 110 to serve it. Specifically, the terminal device 110 may establish connections with the primary network device and the secondary network device simultaneously.

Optionally, the connection established between the terminal device 110 and the primary network device is a primary connection, and the connection established between the terminal device 110 and the secondary network device is a secondary connection. Control signaling for the terminal device 110 may be transmitted through the primary connection, and data for the terminal device 110 may be transmitted through both the primary connection and the secondary connection, or the primary connection only.

As another example, in an embodiment of the present disclosure, the first communication system and the second communication system may be different, but the present disclosure is not limited to any specific types of the first communication system and the second communication system.

For example, the first communication system and the second communication system may be any of various communication systems, including for example: Global System of Mobile Communication (GSM), Code Division Multiple Access (CDMA) system, Wideband Code Division Multiple Access (WCDMA) system, General Packet Radio Service (GPRS) system, Long Term Evolution (LTE) system, LTE Time Division Duplex (TDD) system, Universal Mobile Telecommunication System (UMTS), etc.

Each of the primary network device and the primary network device may be any access network device.

Optionally, in some embodiments, the access network device may be a base station such as Base Transceiver Station (BTS) in a Global System of Mobile communication (GSM) system or a Code Division Multiple Access (CDMA) system, a base station such as NodeB (NB) in a Wideband Code Division Multiple Access (WCDMA) system, an evolutional base station such as Evolutional Node (eNB or eNodeB) in a Long Term Evolution (LTE) system.

Optionally, the access network device may be a base station such as a gNB in a Next Generation Radio Access Network (NG RAN) or an NR system, or a radio controller in a Cloud Radio Access Network (CRAN). Alternatively, the access network device may be a relay station, an access point, a vehicle-mounted device, a wearable device, or a network device in a future evolved Public Land Mobile Network (PLMN), or the like.

In the system 100 shown in FIG. 1, the first network device 130 is e.g., the primary network device, and the second network device 120 is e.g., the secondary network device.

The first network device 130 may be an LTE network device, and the second network device 120 may be an NR network device. Alternatively, the first network device 130 may be an NR network device, and the second network device 120 may be an LTE network device. Alternatively, both the first network device 130 and the second network device 120 may be NR network devices. Alternatively, the first network device 130 may be a GSM network device, a CDMA network device, or the like, and the second network device 120 may also be a GSM network device, a CDMA network device, or the like. Alternatively, the first network device 130 may be a macrocell base station, and the second network device 120 may be a microcell base station, a picocell base station, a femtocell base station, or the like.

Optionally, the terminal device 110 may be any terminal device, including, but not limited to, an apparatus connected via a wired line, e.g., via a Public Switched Telephone Network (PSTN), a Digital Subscriber Line (DSL), a digital cable, or a direct cable connection, and/or via another data connection/network, and/or via a wireless interface, e.g., for a cellular network, a Wireless Local Area Network (WLAN), a digital TV network such as a DVB-H network, a satellite network, an AM-FM broadcast transmitter, and/or another terminal device, and configured to receive/transmit communication signals, and/or an Internet of Things (IoT) device. A terminal device configured to communicate via a wireless interface may be referred to as a "wireless communication terminal", a "wireless terminal", or a "mobile terminal". Examples of the mobile terminal may include, but not limited to, a satellite or cellular phone, a Personal Communications System (PCS) terminal combining cellular radio phone with data processing, fax, and data communication capabilities, a PDA including a radio phone, a pager, Internet/intranet access, a Web browser, a memo pad, a calendar, and/or a Global Positioning System (GPS) receiver, or a conventional laptop and/or palmtop receiver or another electronic device including a radio telephone transceiver. The terminal device may be an access terminal, a User Equipment (UE), a user unit, a user station, a mobile radio station, a mobile station, a remote station, a remote terminal, a mobile device, a user terminal, a terminal, a wireless communication device, a user agent, or a user device. Here, the access terminal can be a cellular phone, a cordless phone, a Session Initiation Protocol (SIP) phone, a Wireless Local Loop (WLL) station, a Personal Digital Assistant (PDA), a handheld device or a computing device having a wireless communication function, another processing device connected to a wireless modem, a vehicle-mounted device, a wearable device, a terminal device in a 5G network, or a terminal devices in a future evolved PLMN, etc.

It is to be noted that the terms "system" and "network" are often used interchangeably herein.

In the embodiment of the present disclosure, a network device serves a cell, and a terminal device communicates with the network device over transmission resources (for example, frequency domain resources, or spectral resources) used for the cell. The cell may correspond to the network device (e.g., a base station). The cell can belong to a macro base station or a base station corresponding to a small cell. The small cell here can include: Metro cell, Micro cell, Pico cell, Femto cell, etc. These small cells are characterized in small coverage and low transmit power, and are suitable for providing high-rate data transmission services.

It is to be understood that the methods in the embodiments of the present disclosure can be applied to transmission of various types of services.

For example, eMBB aims to provide users with multimedia content, services and data. The demand for eMBB is growing very rapidly. As another example, since eMBB may be deployed in different scenarios, such as indoors, urban areas, rural areas, etc., the capabilities and requirements of eMBB vary greatly. Therefore, detailed analysis can be provided in combination with specific deployment scenarios. Another example is URLLC, typical applications of which may include: industrial automation, power automation, telemedicine operations (surgery), traffic safety protection, etc. Typical features of mMTC include: high connection density, small data volume, delay-insensitive services, and low costs and long service lives of modules, etc.

In some special scenarios, a terminal device needs to initiate random access to a network device to establish a connection with the network device. There are many events that can trigger the terminal device to perform random access, such as in an initial access process of the terminal device, in a reestablishment process of the terminal device, when the terminal device has uplink data to transmit but detects out-of-synchronization in uplink, when the terminal device has uplink data to transmit but there is no resource for Scheduling Request (SR), when the terminal device needs to perform cell handover, or when the base station has downlink data to transmit but detects out-of-synchronization in uplink.

The random access of the terminal device may include contention-based random access and non-contention-based random access.

For the contention-based random access process, reference can be made to Fig. 2.

At S210, a terminal device transmits a message 1 (MSG1) to a network device on a random access channel. The MSG1 contains a random access preamble. Here, the MSG1 may be a physical layer message.

At S220, after receiving the MSG1, the network device can transmit an MSG2 on a Downlink Share Channel (DL-SCH). Here, the MSG2 may be a Random Access Response (RAR). Here, the MSG2 may be a Media Access Control (MAC) layer message.

Here, the RAR carries a Timing Advance (TA) adjustment of uplink transmission, information on available uplink resources, and a Temporary Cell Radio Network Temporary Identifier (T-CRNTI), that is, a temporary CRNTI.

Optionally, the RAR may be generated at a Media Access Control (MAC) layer of the network device. One MSG2 can correspond to random access requests from more than one terminal device at the same time.

At S230, after receiving the MSG2, the terminal device determines whether the MSG2 is an RAR message for itself. When determining that the MSG2 is the RAR message for itself, the terminal device transmits a message 3 (MSG3) in the uplink resources indicated in the MSG2. The MSG3 carries an RNTI specific to the terminal device. Here, the MSG3 may be an RRC layer message.

At step 240, after receiving the MSG3, the network device can transmit an MSG4 message to the terminal device. Here, the MSG4 contains a contention resolution message and uplink transmission resources allocated by the network device to the terminal device. Here, the MSG4 may be an MAC layer message.

After receiving the MSG4, the terminal device can detect whether the specific RNTI transmitted in the MSG3 is included in the contention resolution message transmitted by the network device. If so, it indicates that the random access process of the terminal device has succeeded, or otherwise the random access process is considered to be failed. After the random access process fails, the terminal device needs to initiate the random access process again from the first step.

Optionally, the MSG1 and the MSG2 may not use an HARQ mechanism, while the MSG3 and the MSG4 may use an HARQ mechanism.

If one random access attempt fails, the terminal device can initiate a next random access attempt until a maximum number of retransmissions and/or maximum retransmission time allowed by the network side is reached.

The terminal device typically performs random access by transmitting a preamble to the network device. If the terminal device transmits the preamble for the first time and the current random access fails, the terminal device can transmit the random access preamble to the network device for the second time, and the transmission power of the preamble for the second time can be increased when compared to the transmission power of the preamble for the first time, by a step that may be configured by the network device or may be pre-configured in the terminal device.

The non-contention-based random access process may be for example as shown in FIG. 3.

At S310, a network device transmits an MSG0 to a terminal device. The MSG0 may include a preamble configuration message indicating a preamble for random access. The MSG0 may be a physical layer message.

At S320, the terminal device transmits an MSG1 to the network device. The MSG1 contains the random access preamble in S310. The MSG1 may be a physical layer message.

At S330, the network device transmits an MSG2 to the terminal device. The MSG2 may be a random access response message. The MSG2 may be a MAC layer message.

In the non-contention-based random access process, the terminal device can obtain resources for non-contention-based random access via RRC signaling and/or PDCCH signaling, and perform random access on the resources for non-contention-based random access.

In the following, the random access process of the terminal device will be described with reference to a handover process as an example. The embodiment of the present disclosure is not limited to any communication scenario of the handover process. For example, it may be the LTE system or the NR system.

When the terminal device that is using a network service moves from a source cell to a coverage of a target cell, or due to load adjustment of the wireless transmission service, activation of operation and maintenance, device failure, etc., in order to ensure continuity of communication and quality of service for the terminal device, the communication system needs to transfer the communication link between the terminal device and the source cell to the target cell, i.e., to perform a cell handover process. The source cell can be understood as the cell to which the terminal device is currently connected, and the target cell can be understood as the cell to which the terminal device is about to switch.

The embodiment of the present disclosure is not limited to any specific scheme in which the terminal device performs the cell handover. For example, the terminal device can perform intra-station handover, that is, the source cell and the target cell belong to one base station. In another example, the terminal device may also perform handover between base stations, that is, the source cell and the target cell belong to different base stations.

The embodiment of the present disclosure is not limited to any interface used for the cell handover between the base stations. For example, it can be a cell handover based on an X2 interface or an Xn interface, or it can be a cell handover based on an S 1 interface or an N2 interface.

For the Xn interface as an example, the handover process of the terminal device can be divided into the following three phases: handover preparation, handover execution, and handover completion.

The handover preparation may include the terminal device measuring and reporting link quality, transmitting a handover request to a source base station, and receiving a handover command transmitted by the source base station.

The handover execution may include the terminal device executing the handover process immediately after receiving the handover command transmitted by the source base station. For example, the connection with a source cell can be disconnected and the connection with a target cell (e.g., by performing random access, transmitting an RRC handover complete message to a target base station, etc.) and Serial Number (SN) state transfer and data forwarding to the target cell can be completed.

The handover completion may include the target cell and an Access and Mobility Management Function (AMF) and a User Plane Function (UPF) performing link switching, releasing a UE context at the source base station, etc.

For the NR system, the link switch and release of the UE context at the source base station can be performed by the AMF and the UPF. For the LTE system, the link switch and release of the UE context at the source base station can be performed by a Mobility Management Entity (MME). The embodiment of the present disclosure is not limited to any system it is applied to, and may be applied to the LTE system or the NR system.

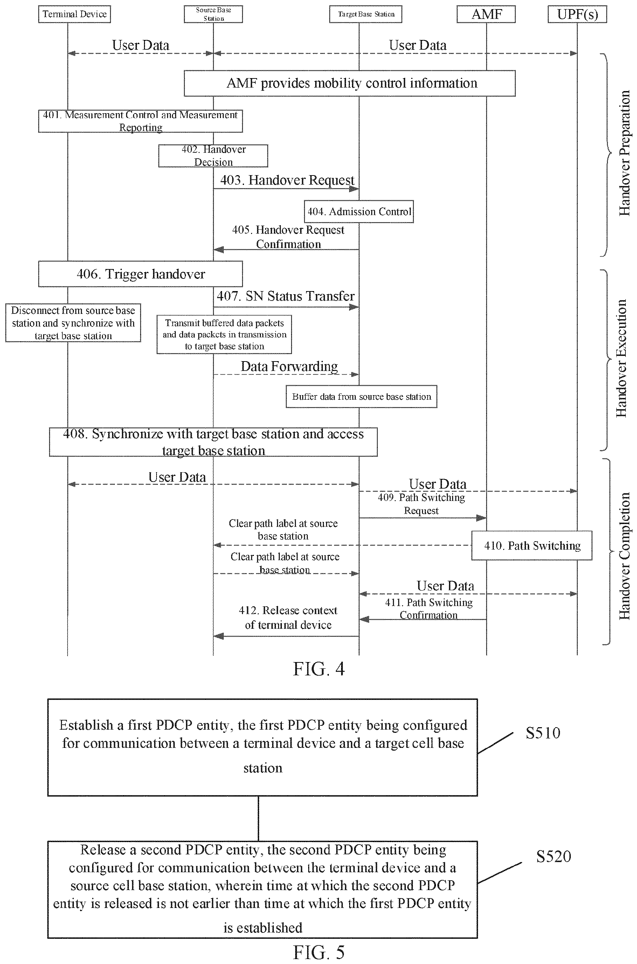

Specifically, as shown in FIG. 4, the handover preparation phase (401-405) may include the following steps.

At 401, a source base station triggers a terminal device to measure neighboring cells, such that the terminal device can measure the neighboring cells and report measurement results to the source base station.

At 402, the source base station evaluates the measurement results reported by the terminal device and decides whether to trigger a handover.

At 403, if the source base station decides to trigger a handover, it can transmit a handover request to a target base station.

At 404, after receiving the handover request transmitted by the source base station, the target base station can start admission according to service information transmitted by the source base station, and perform radio resource configuration.

At 405, the target base station transmits a handover request confirmation message to the source base station, and returns an admission result and radio resource configuration information in the target base station to the source base station. At this point, the handover preparation phase is completed.

The second phase, i.e., the handover execution phase (406-408), can include the following steps.

At 406, after the source base station receives the handover request confirmation message from the target base station, it can trigger the terminal device to perform handover.

At 407, the source base station can forward buffered data, data packets in transmission, a system serial number of data, etc., to the target base station. The target base station can buffer the data received from the source base station.

In addition, the terminal device can disconnect from the source base station and establish synchronization with the target base station.

At 408, the terminal device synchronizes with the target base station. At this point, the handover execution phase is completed.

The third stage, i.e., the handover completion phase (409-412), can include the following steps.

At 409, the target base station transmits a path switching request to an Access and Mobility Management Function (AMF).

At 410, after receiving the path switching request from the target base station, the AMF performs path switching with a User Plane Function (UPF), and clears a path label of a user plane of the source base station.

At 411, after the path switching is completed, the AMF can transmit a path switching confirmation message to the target base station.

At 412, the target base station transmits a terminal device context release message to the source base station to notify the source base station that the handover has succeeded, and trigger the source base station to release the context of the terminal device. At this point, the handover is completed.

The terminal device starts a T304 timer immediately after receiving a handover command, and starts downlink synchronization with the target cell, obtains Master Indication Block (MIB) information of the target cell, and then initiates random access. In the random access process, a number of preamble retransmissions are allowed until the random access succeeds. Further, if the T304 timer expires, indicating that the handover fails, the terminal device can directly trigger an RRC connection reestablishment process.

In the traditional handover process, after receiving the handover command, the terminal device will first disconnect from the source base station, and then establish the connection with the target base station. There will be a time difference between the terminal device disconnecting from the source base station and the terminal device communicating with the target base station, and this time difference can be referred to as handover interruption time.

The handover interruption time can be understood as a time difference between the time at which the communication between the terminal device and the source base station ends and the time at which the communication between the terminal device and the target base station starts, or can also be understood as a time difference between the time at which the last message between the terminal device and the source base station is transmitted and the time at which the first message between the terminal device and the target base station is transmitted.

During the handover process of the terminal device, a corresponding Packet Data Convergence Protocol (PDCP) will be reestablished for each bearer. Reestablishing a PDCP may refer to reestablishing based on a PDCP entity used to communicate with the source base station to generate a PDCP entity used to communicate with the target base station. Since the PDCP for the target base station as reestablished by the terminal device is generated based on the PDCP for the source base station, once the terminal device has reestablished the PDCP, it means that the terminal device has released the PDCP for the source base station, and the terminal device cannot continue to communicate with the source base station.

In the 3GPP mobility enhancement topic, an optimization method for reducing the interruption time during handover is proposed, including the following two architectures, and the solutions according to the embodiments of the present disclosure can be used for both architectures.

1. Handover based on dual connectivity, or handover based on split bearer. During handover, the target base station is first added as a Secondary Node (SN), and then changed from an SN to a Master Node (MN) via role change signaling. Finally, the source base station is released, so as to achieve the effect of reducing the handover interruption time.

2. eMBB-based handover, or non-split-bearer-based handover. This handover scheme can be based on an existing handover process. After receiving the handover command, the terminal device continues maintaining the connection with the source base station, and at the same time initiates random access to the target base station, which can also achieve the effect of reducing the handover time of the terminal.

In these two architectures, the terminal device will not disconnect from the source base station immediately after receiving the handover command. In the case where the terminal device does not disconnect from the source base station, the terminal device will not be able to establish the PDCP for the target base station by using the traditional scheme of PDCP reestablishment. Therefore, how to establish the PDCP for the target base station becomes a problem to be solved.

An embodiment of the present disclosure provides a method for cell handover, which can solve the problem of establishing the PDCP for the target base station without disconnecting the terminal device from the source base station. As shown in FIG. 5, the method includes steps S510 to S520. This method can be performed by the terminal device described above.

At S510, a first PDCP entity is established. The first PDCP entity is configured for communication between a terminal device and a target cell base station.

At S520, a second PDCP entity is released. The second PDCP entity is configured for communication between the terminal device and a source cell base station.

Here, time at which the second PDCP entity is released is not earlier than time at which the first PDCP entity is established.

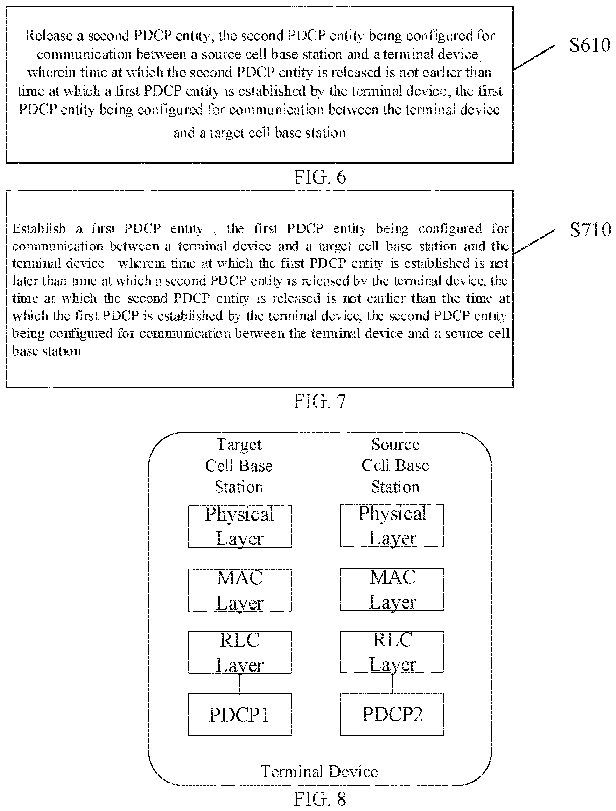

FIG. 6 is another method for cell handover according to an embodiment of the present disclosure. The method can be performed by a source cell base station. The method includes a step S610.

At S610, a second PDCP entity is released. The second PDCP entity is configured for communication between a source cell base station and a terminal device. Here, time at which the second PDCP entity is released is not earlier than time at which a first PDCP entity is established by the terminal device. The first PDCP entity is configured for communication between the terminal device and a target cell base station.

FIG. 7 is yet another method for cell handover according to an embodiment of the present disclosure. The method can be performed by a target cell base station. The method includes a step S710.

At S710, a first PDCP entity is established. The first PDCP entity is configured for communication between a target cell base station and a terminal device. Here, time at which the first PDCP entity is established is not later than time at which a second PDCP entity is released by the terminal device. The second PDCP entity is configured for communication between the terminal device and a source cell base station.

The methods in FIG. 5, FIG. 6, and FIG. 7 correspond to each other and in order to simplify the description, the methods in FIG. 5, FIG. 6, and FIG. 7 will be described together below. The following method is applicable to the terminal device, the source cell base station and the target cell base station.

The source cell base station and the target cell base station may each be the network device described above.

The source cell base station may refer to a base station to which a source cell belongs, and the source cell may refer to a serving cell where the terminal device is located before the handover. The target cell base station may refer to a base station to which a target cell belongs, and the target cell may refer to a serving cell where the terminal device is located after the handover. The target cell is different from the source cell, but the target cell base station may be same as or different from the source cell base station.

The target cell base station and the source cell base station being same may mean that the terminal device switches between different cells within the same base station. The target cell base station being different from the source cell base station may mean that the terminal device switches between different cells within different base stations.

The first PDCP entity refers to a PDCP entity used to carry data between the terminal device and the target cell base station, and the second PDCP entity refers to a PDCP entity used to carry data between the terminal device and the source cell base station.

In this context, the PDCP entity established by the target cell base station is also referred to as the first PDCP entity. The first PDCP entity belongs to the target cell base station side, and the first PDCP entity established by the terminal device belongs to the terminal device side. Both first PDCP entities are used for communication between the terminal device and the target cell base station. However, the first PDCP entity established by the target cell base station and the PDCP entity established by the terminal device may be different entities, but their schemes for establishing PDCP may be the same. The scheme in which the terminal device establishes the PDCP entity as described below is also applicable to the target cell base station.

Similarly, in this context, the PDCP entity released by the source cell base station is also referred to as the second PDCP entity. The second PDCP entity belongs to the source cell base station side, and the second PDCP entity released by the terminal device belongs to the terminal device side. Both second PDCP entities are used for communication between the terminal device and the source cell base station. However, the scheme and time for the source cell base station to release the second PDCP may be the same as the scheme and time for the terminal device to release the second PDCP entity.

The terminal device may establish the first PDCP entity and/or release the second PDCP entity after the terminal device receives a handover command transmitted by the source cell base station.

The source cell base station may release the second PDCP entity after the source cell base station transmits a handover command to the terminal device. The target cell base station may establish the first PDCP entity after the target cell base station transmits a handover request confirmation message to the source cell base station.

Establishing the first PDCP entity may refer to establishing one or more parameters required on the PDCP for communication between the terminal device and the target cell base station.

Releasing the second PDCP entity may refer to releasing one or more parameters of the second PDCP entity for the terminal device to communicate with the source cell base station. After the terminal device releases the second PDCP entity, the terminal device cannot continue communicating with the source cell base station. After the source cell base station releases the second PDCP entity, the source cell base station cannot continue communicating with the terminal device.

The time at which the second PDCP entity is released not being earlier than the time at which the first PDCP entity is established may include the time at which the second PDCP entity is released being the same as the time at which the first PDCP entity is established, or the time at which the second PDCP entity is released being later than the time at which the first PDCP entity is established. The time at which the second PDCP entity is released not being earlier than the time at which the second PDCP entity is established means that the establishment of the PDCP entity will not affect the handover interruption time, which is advantageous to reduce the handover interruption time of the terminal device.

The time at which the first PDCP entity is established may refer to the time at which the establishment of the PDCP entity is started, or may refer to the time at which the establishment of the first PDCP entity is completed.

In an embodiment of the present disclosure, the first PDCP entity and the second PDCP entity may be two different PDCP entities, or the first PDCP entity and the second PDCP entity belong to one PDCP entity. The first PDCP entity and the second PDCP entity belonging to one PDCP entity may mean that the first PDCP entity is generated by modifying some configuration based on the second PDCP entity, or the first PDCP entity is generated by adding some configuration to the second PDCP entity.

The process of establishing and/or releasing the PDCP entity in the embodiment of the present disclosure will be described in detail in the following two cases. The scheme for the target cell base station to establish the first PDCP entity corresponds to the scheme for the terminal device to establish the first PDCP entity. For simplicity, the following description will be given with reference to the terminal device as an example.

Case 1: The first PDCP entity is different from the second PDCP entity. In this case, the terminal device may establish the first PDCP entity that is different from the second PDCP entity. In other words, the first PDCP entity and the second PDCP entity can exist at the same time, and the terminal device can communicate with the source cell base station and the target cell base station at the same time.

As shown in FIG 8, the data between the terminal device and the network device can be transmitted at the physical layer, the MAC layer, the Radio Link Control (RLC) layer, and the PDCP layer. As shown, PDCP1 is used for communication between the terminal device and the target cell base station, and PDCP2 is used for communication between the terminal device and the source cell base station. The terminal device can maintain PDCP1 and PDCP2 at the same time, such that the terminal device can establish PDCP1 without releasing PDCP2 first, and the time at which PDCP2 is released can be later than the time at which PDCP1 is established, which can reduce the handover interruption time of the terminal device.

The embodiment of the present disclosure is not limited to any specific scheme for generating the first PDCP entity.

As an example, the first PDCP entity may be generated according to configuration information for the first PDCP entity as transmitted by the source cell base station. For example, the source cell base station may transmit a first message to the terminal device, and the first message may include the configuration information for the first PDCP entity. After receiving the first message, the terminal device can establish the first PDCP entity according to the configuration information for the first PDCP entity included in the first message.

The configuration information for the first PDCP entity may include all information required for establishing the first PDCP entity. For example, it may include a PDCP context, a security key for encryption and decryption, a Robust Header Compression (ROHC) configuration for header compression and decompression, and other parameters. Here, the RoHC configuration can be understood as an RoHC profile.

Various other parameters can be included in the PDCP entity. For example, the other parameters may include at least one of: a buffer size, a discard timer, a header compression related profile and configuration, a maximum Cell Identity (CID), a PDCP duplication configuration, a PDCP SN value configuration, a status feedback configuration, a PDCP control Protocol Data Unit (PDU) type, a PDU period status type, a reordering timer (t-Reordering), an integrity protection indication (rn-Integrity Protection) and a status report indication (status Report Required).

As another example, the first PDCP entity may be established according to related parameters in the second PDCP entity. For example, the PDCP context in the first PDCP entity may be same as the PDCP context in the second PDCP entity, and the terminal device may use the PDCP context in the second PDCP entity as the PDCP context of the first PDCP entity.

The PDCP context can also be referred to as a variable parameter in PDCP. The PDCP context may include at least one of: an uplink PDCP sequence number, an uplink superframe number, a downlink PDCP sequence number, and a downlink superframe number.

The terminal device may use the PDCP context in the second PDCP entity as the PDCP context of the first PDCP entity according to an agreement in a protocol directly, or an instruction from the source cell base station to the terminal device. For example, the source cell base station may transmit first indication information to the terminal device, the first indication information indicating that the PDCP context in the first PDCP entity is determined based on the PDCP context in the second PDCP entity.

Of course, the configuration information for the first PDCP entity as transmitted by the source cell base station to the terminal device may not include the PDCP context. After receiving the configuration information for the first PDCP entity, the terminal device may obtain the PDCP context from the second PDCP entity, and establish the first PDCP entity according to the obtained PDCP context and the configuration information for the first PDCP entity,

For the terminal device, the first message may be a Radio Resource Control (RRC) reconfiguration message or a handover command. For the target cell base station, the first message may include a handover request message.

For example, when the source cell base station transmits a handover command to the terminal device, the configuration information for the first PDCP entity may be configured in the handover command. In another example, when the source cell base station transmits a handover request message to the target cell base station, the configuration information for the first PDCP entity may be configured in the handover request message.

As another example, after the T304 timer expires, it indicates that the handover of the terminal device fails. At this time, the terminal device can directly trigger an RRC connection reestablishment process. When the source cell base station transmits an RRC connection reconfiguration message to the terminal device, the configuration information for the first PDCP entity may be carried in the RRC connection reconfiguration message for transmitting to the terminal device.

In an embodiment of the present disclosure, a security key in the first PDCP entity and a security key in the second PDCP entity may be different, and/or an RoHC configuration in the first PDCP entity and an RoHC configuration in the second PDCP entity may be different. That is, the encryption scheme used for communication between the terminal device and the target cell base station is different from the encryption scheme used for communication between the terminal device and the source cell base station, and the header compression scheme for communication between the terminal device and the target cell base station is different from the header compression scheme used for communication between the terminal device and the source cell base station.

In the embodiment of the present disclosure, the terminal device uses two different PDCP entities to communicate with the source cell base station and the target cell base station respectively, such that the establishment of the first PDCP entity does not lead to the release of the second PDCP entity. This can ensure that the terminal device can establish the PDCP entity corresponding to the target cell base station without disconnecting from the source cell base station. In this case, the time at which the first PDCP entity is released may be later than the time at which the establishment of the second PDCP entity is completed, which is advantageous to achieve handover time of the terminal of 0 ms for the terminal device and provide the effect of seamless handover.

The embodiment of the present disclosure is not limited to any specific time point at which the second PDCP entity is released by the terminal device. For example, the second PDCP entity may be directly released when the terminal device releases the source cell base station, that is, the terminal device may release the source cell base station and the second PDCP entity at the same time.

The embodiment of the present disclosure is not limited to any specific time at which the first PDCP entity is established by the terminal device, and it may be any time point after the terminal device receives the handover command. For example, the time at which the first PDCP entity is established by the terminal device can be any of: when a second message transmitted by the source cell base station is received by the terminal device, when a message in a random access process is received by the terminal device, when a message in the random access process is transmitted by the terminal device, and when a specific timer expires.

The embodiment of the present disclosure is not limited to any specific time point at which the first PDCP entity is established by the target cell base station. For example, it may be after the target cell base station transmits a message in a random access process. In another example, it may be after the target cell base station receives a message in the random access process.

The second message transmitted by the source cell base station being received by the terminal device may mean any message transmitted by the source cell base station being received by the terminal device. For example, the second message may be a handover command, or the second message may be an RRC reconfiguration message. The terminal device may establish the first PDCP entity after receiving the second message.

The message in the random access process being received by the terminal device may mean an MSG2 and/or MSG4 being received by the terminal device. When the terminal device receives the MSG2 and/or MSG4, it may establish the first PDCP entity. Correspondingly, the target cell base station may establish the first PDCP entity after transmitting the MSG2 and/or MSG4.

The message in the random access process being transmitted by the terminal device may mean an MSG1 and/or MSG3 being transmitted by the terminal device. After transmitting the MSG1 and/or MSG3, the terminal device may establish the first PDCP entity. Correspondingly, the target cell base station may establish the first PDCP entity after receiving the MSG1 and/or MSG3.

The random access process can be a contention-based random access process or a non-competition-based random access process. The random access process can be a four-step random access process or a two-step random access process. The embodiment of the present disclosure is not limited to any of these examples.

The message in the random access process being received by the terminal device or the message in the random access process being transmitted by the terminal device indicates that the terminal device has communicated with the target cell. At this time, the handover interruption time of 0ms can be guaranteed, and then the first PDCP entity can be established without affecting the handover interruption time of the terminal device.

For the terminal device, the specific timer may refer to a timer that is started after the terminal device receives any message transmitted by the source cell base station. For example, the specific timer may be a timer that is started after the terminal device receives a handover command transmitted by the source cell base station. The embodiment of the present disclosure is not limited to any time length of the timer. For the target cell base station, the specific timer may refer to a timer that is started after the target cell base station receives any message transmitted by the source cell base station and/or the terminal device. For example, the specific timer may be a timer that is started by the target cell base station after receiving a handover request message transmitted by the source cell base station.

The terminal device may retransmit data and/or transmit a status report to the target cell base station via the first PDCP entity after establishing the first PDCP entity and/or releasing the second PDCP entity. For example, during the handover process of the terminal device, data may not be received correctly. In this case, the terminal device may retransmit the data that is not correctly received via the first PDCP entity after establishing the first PDCP entity and/or releasing the second PDCP entity. Retransmitting the data via the first PDCP entity may mean retransmitting the data to the target cell base station via the first PDCP entity. In addition, the terminal device can also transmit a status report to the target cell base station, and the status report may include data reception indication, e.g., which data is received correctly and which data is not.

After establishing the first PDCP entity, the target cell base station may receive the retransmitted data and/or the status report transmitted by the terminal device via the first PDCP entity.

In the process of establishing the first PDCP entity, the terminal device may maintain a connection with the source cell base station. Then, after the establishment of the first PDCP entity is completed, the connection with the source cell base station can be released, which is advantageous to reduce the handover interruption time of the terminal device.

Before establishing the first PDCP entity, the terminal device may also receive a handover command transmitted by the source cell base station. The handover command instructs the terminal device to switch to the target cell base station.

Case 2: The first PDCP entity is same as the second PDCP entity. In this case, there is only one PDCP entity at a time.

As an example, the first PDCP entity may include the second PDCP. That is, the first PDCP entity may maintain parameters in the second PDCP entity. In this way, since the parameters in the second PDCP entity are all maintained, the first PDCP entity can communicate with both the target cell base station and the source cell base station.

The first PDCP entity may be obtained by adding a first parameter to the second PDCP entity. The first parameter may be used for communication between the terminal device and the target cell base station. The first parameter may include, for example, at least one of a security key and an RoHC configuration. The terminal device may add a security key and/or an RoHC configuration, in addition to the parameters included in the second PDCP entity, for communication with the target cell base station. The target cell base station may also add a security key and/or an RoHC configuration to the parameters included in the second PDCP entity, for communication with the terminal device.

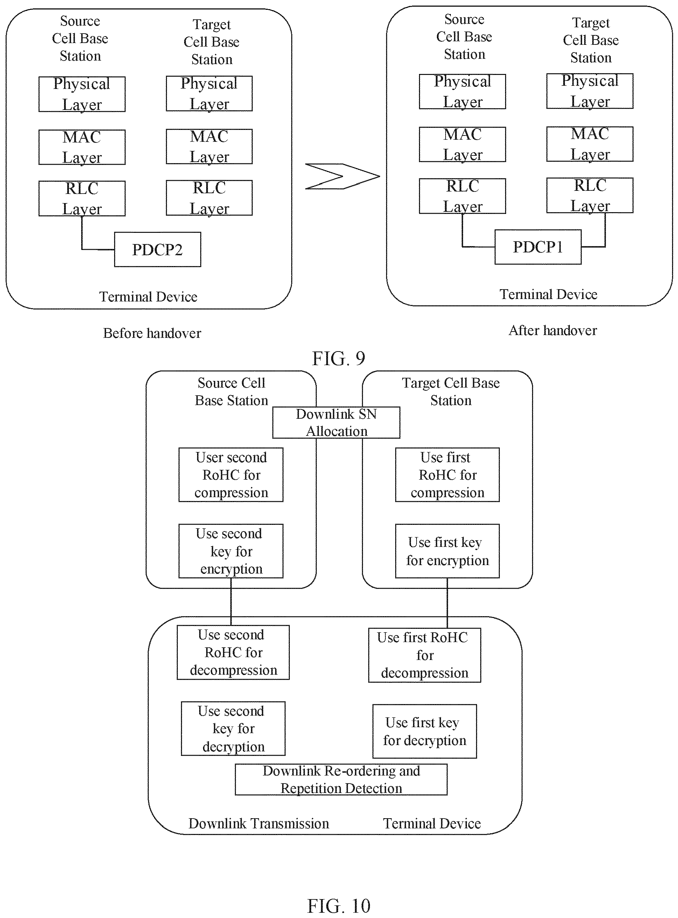

As shown in FIG. 9, before the cell handover, the terminal device can communicate with the target cell base station via PDCP2. After receiving the handover command, the terminal device can add the first parameter to PDCP2 to form PDCP1. Since PDCP1 still maintains the configuration of PDCP2, such as a second parameter, PDCP1 can be used for communication between the terminal device and the source cell base station. In addition, PDCP1, in which the first parameter used for communication with the target cell base station has been added, can also be used for communication with the target cell base station.

The second parameter may be used for communication between the terminal device and the source cell base station. The second parameter may include at least one of a security key and an RoHc configuration, and the second parameter is different from the first parameter. Here, the security key included in the first parameter is different from the security key included in the second parameter, and the RoHC configuration included in the first parameter is different from the RoHC configuration included in the second parameter.

For PDCP1, two sets of keys and RoHC profiles are maintained, which are used for data transmission with the source cell base station and the target cell base station, respectively.

It is assumed that the first parameter includes a first key and a first RoHC profile, and the second parameter includes a second key and a second RoHC profile.

As shown in FIG. 10, during the communication process of the terminal device, for downlink data, when transmitting the data to the terminal device, the target cell base station can use the first key to encrypt the data and use the first RoHC profile for header compression, and the source cell base station can use the second key to encrypt the data and use the second RoHC profile for header compression. When the terminal device receives the data, it can first determine the data is transmitted by which base station. If the data is transmitted by the target cell base station, the first key is used to decrypt the data, and the first RoHC profile is used for header decompression. If the data is transmitted by the source cell base station, the second key is used to decrypt the data, and the second RoHC profile is used for header decompression.

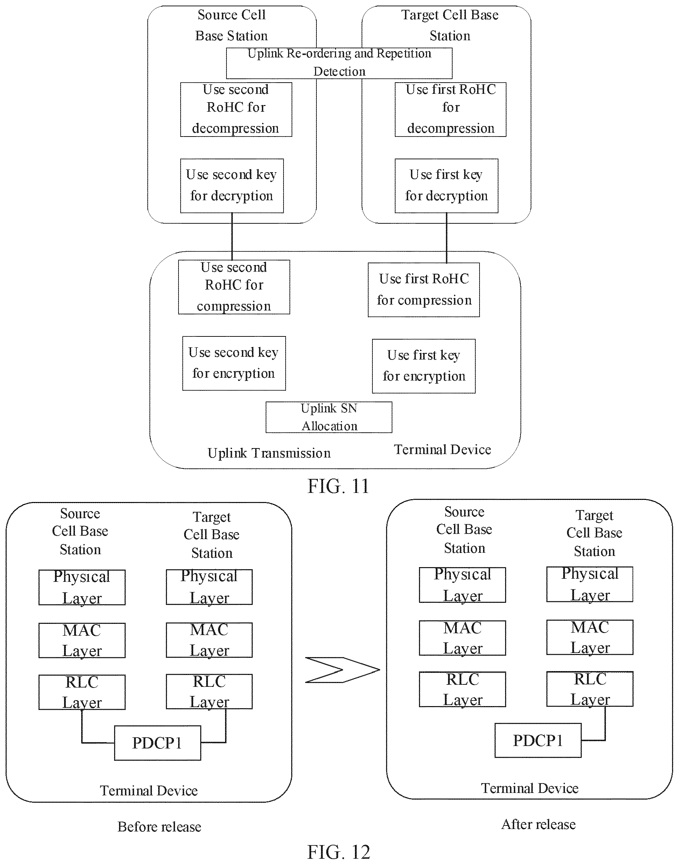

As shown in FIG. 11, for uplink data, when transmitting data to a base station, for example, to the target cell base station, the terminal device can use the first key to encrypt the data and use the first RoHC profile for header compression, and when transmitting data to the source cell base station, the terminal device can use the second key to encrypt the data and use the second RoHC profile for header compression. After the target cell base station receives the data transmitted by the terminal device, it can use the first key to decrypt the data and use the first RoHC profile for header decompression. After the source cell base station receives the data transmitted by the terminal device, it can use the second key to decrypt the data and use the second RoHC profile for header decompression.

The terminal device releasing the second PDCP entity may mean the terminal device releasing the second parameter in the second PDCP entity. As shown in FIG. 12, the terminal device releases the second parameter included in PDCP1. Specifically, the terminal device may remove the security key and/or RoHC configuration used for data transmission with the source cell base station.

PDCP1 contains two sets of security keys and RoHC configurations, and can perform data transmission with both the source cell base station and the target cell base station at the same time. When the terminal device removes the security key and RoHC configuration corresponding to the source cell base station, it means that the terminal device releases the source cell base station. In this case, the terminal device can only perform data transmission with the target cell base station.

With reference to the above description, in this case, the embodiment of the present disclosure is not limited to any specific time at which the first PDCP entity is established by the terminal device, and it may be any time point after the terminal device receives the handover command. For example, the time at which the first PDCP entity is established by the terminal device can be any of: when a second message transmitted by the source cell base station is received by the terminal device, when a message in a random access process is received by the terminal device, when a message in the random access process is transmitted by the terminal device, and when a specific timer expires. For simplicity, further details will be omitted here.

With reference to the above description, in this case, the terminal device may retransmit data and/or transmit a status report via the first PDCP entity after adding the first parameter and/or releasing the second parameter. For simplicity, further details will be omitted here.

In the process of adding the first parameter, the terminal device can maintain the connection with the source cell base station.

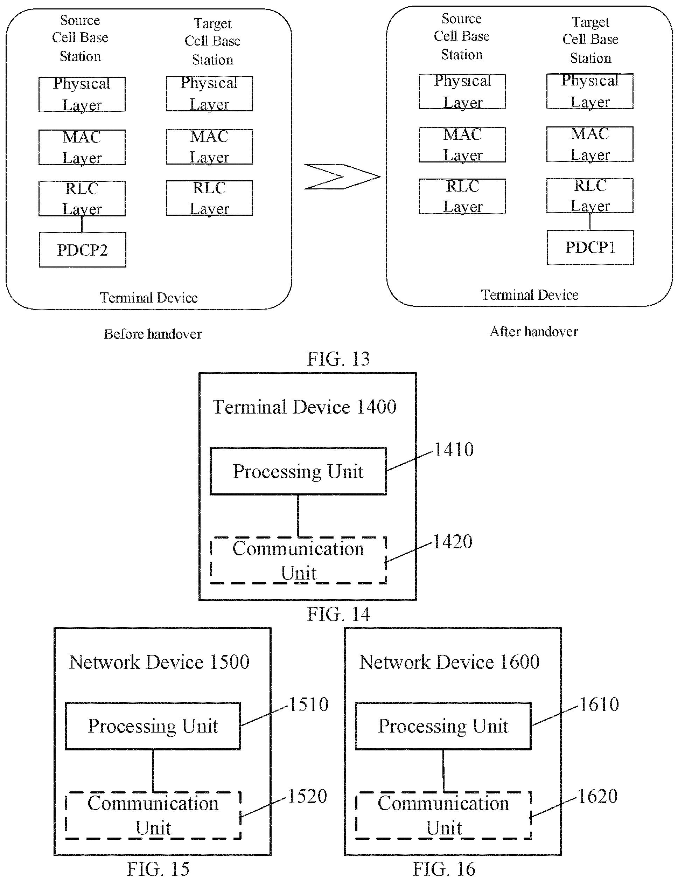

As another example, the terminal device can use the traditional scheme of PDCP reestablishment. As shown in FIG. 13, the PDCP entity corresponding to the target cell base station is established, but the time at which the PDCP is reestablished by the terminal device can be after transmitting an MSG1 to the target cell base station. When the terminal device reestablishes the PDCP entity, the terminal device has communicated with the target cell base station, which means that the handover interruption time of the terminal device is no longer affected by the PDCP reestablishment, thereby ensuring the handover interruption time of the terminal device.

The target cell base station may also generate the first PDCP entity by means of reestablishment after receiving the MSG1 transmitted by the terminal device.

In the process of generating the first PDCP entity, the terminal device may maintain the PDCP context in the second PDCP entity, and only update the security key and RoHC configuration, thereby obtaining the second PDCP entity.

The PDCP reestablishment by the terminal device may be performed when random access to the target cell base station has succeeded. The terminal device establishing the first PDCP entity may include generating the first PDCP entity by means of reestablishment based on the second PDCP entity when random access to the target cell base station has succeeded.

After receiving the handover command, the terminal device can initiate random access to the target cell base station. When the random access has succeeded, the terminal device can generate the first PDCP entity by means of reestablishment.

The embodiment of the present disclosure is not limited to any specific scheme for the terminal device to perform the random access. For example, the terminal device can use the four-step random access, or the two-step random access. In another example, the terminal device may use the contention-based random access or the non-competition-based random access.

After receiving a third message, the terminal device can generate the first PDCP entity based on the second PDCP entity. The third message may include a random access response message and/or a contention resolution message.

The random access response message may refer to a random access response message based on a non-contention-based random access process. After the terminal device receives the random access response message, it means that the random access of the terminal device has succeeded and the connection between the terminal device and the target cell base station has been established.

For non-contention-based random access, the success of the random access of the terminal device may mean that the terminal device has successfully transmitted an RRC reconfiguration complete message. In other words, after successfully transmitting the RRC reconfiguration complete message, the terminal device can generate the first PDCP entity by means of reestablishment.

The contention resolution message may refer to MSG4 in a contention-based random access process, which indicates that the terminal device has succeeded in the contention. After the terminal device receives the contention resolution message, it means that the random access of the terminal device has succeeded and the connection between the terminal device and the target cell base station has been established.

In the embodiment of the present disclosure, the terminal device may maintain the connection with the source cell base station while performing the random access to the target cell base station.

Since the first PDCP entity is generated based on the second PDCP entity, when the terminal device starts to establish the first PDCP entity, it means that the second PDCP entity has been released. In this case, the time at which the second PDCP entity is released by the terminal device is equal to the time at which the first PDCP entity is established by the terminal device.

The terminal device generating the first PDCP entity when the random access to the target cell base station has succeeded may mean that the first PDCP entity is generated as soon as the random access to the target cell base station succeeds, or that the first PDCP entity is generated when a period of time has lapsed after the random access to the target cell base station succeeds.

The target base station and the target cell base station in the embodiment of the present disclosure have the same meaning, both referring to the base station where the target cell is located. The source base station and the source cell base station have the same meaning, both referring to the base station where the source cell is located. The target base station and the source base station can each be the network device described above.

The wireless communication method according to the embodiment of the present disclosure has been described in detail above. An apparatus according to an embodiment of the present disclosure will be described below with reference to FIG. 14 to FIG. 19. The technical features described in the method embodiment are applicable to the following apparatus embodiment.

FIG. 14 is a schematic block diagram of a terminal device according to an embodiment of the present disclosure. The terminal device may be any of the terminal devices described above. The terminal device 1400 in FIG. 14 includes a processing unit 1410.

The processing unit 1410 is configured to establish a first Packet Data Convergence Protocol (PDCP) entity. The first PDCP entity is configured for communication between the terminal device and a target cell base station.

The processing unit 1410 is further configured to release a second PDCP entity. The second PDCP entity is configured for communication between the terminal device and a source cell base station. Time at which the second PDCP entity is released is not earlier than time at which the first PDCP entity is established.

Optionally, the first PDCP entity is different from the second PDCP entity.

Optionally, the terminal device further includes a communication unit 1420 configured to receive a first message transmitted by the source cell base station. The first message includes configuration information for the first PDCP entity. The processing unit 1410 is configured to establish the first PDCP entity according to the configuration information for the first PDCP entity.

Optionally, the first message includes at least one of a Radio Resource Control (RRC) reconfiguration message and a handover command.

Optionally, a context in the first PDCP entity is determined according to a context in the second PDCP entity.

Optionally, the terminal device further includes a communication unit 1420, configured to receive first indication information transmitted by the source cell base station. The first indication information indicates that a PDCP context in the first PDCP entity is determined based on a PDCP context in the second PDCP entity.

Optionally, the PDCP context includes at least one of: an uplink PDCP sequence number, an uplink superframe number, a downlink PDCP sequence number, and a downlink superframe number.

Optionally, a security key in the first PDCP entity and a security key in the second PDCP entity are different, and/or a Robust Header Compression (ROHC) configuration in the first PDCP entity and an ROHC configuration in the second PDCP entity are different.

Optionally, the first PDCP entity includes one or more parameters in the second PDCP entity, and the first PDCP entity is further configured for communication between the terminal device and the source cell base station.

Optionally, the first PDCP entity is obtained by adding a first parameter to the second PDCP entity. The first parameter being used for communication between the terminal device and the target cell base station. The processing unit 1410 is configured to release a second parameter in the second PDCP entity, the second parameter being used for communication between the terminal device and the source cell base station. Time at which the second parameter is released is not earlier than time at which the first parameter is added. The first parameter is different from the second parameter.

Optionally, each of the first parameter and the second parameter includes at least one of a security key and a Robust Header Compression (ROHC) configuration.

Optionally, the time at which the first PDCP entity is established includes at least one of: when a second message transmitted by the source cell base station is received, when a message in a random access process is received, when a message in the random access process is transmitted, and when a specific timer expires.

Optionally, the second message includes a handover command.

Optionally, the specific timer is a timer that is started after the terminal device receives a handover command transmitted by the source cell base station.

Optionally, the processing unit 1410 is further configured to maintain a connection with the source cell base station while establishing the first PDCP entity.

Optionally, the processing unit 1410 is configured to generate the first PDCP entity based on the second PDCP entity when random access to the target cell base station has succeeded.

Optionally, the terminal device further includes a communication unit 1420 configured to receive a third message transmitted by the source cell base station. The third message includes at least one of: a Random Access Response (RAR) message and a contention resolution message.

Optionally, the processing unit 1410 is further configured to maintain a connection with the source cell base station while performing the random access to the target cell base station.

Optionally, the terminal device further includes a communication unit 1420, configured to retransmit data and/or transmit a status report via the first PDCP entity after the first PDCP entity is established or the second PDCP entity is released.

Optionally, the terminal device further includes a communication unit 1420 configured to receive a handover command transmitted by the source cell base station. The handover command instructs the terminal device to switch to the target cell base station.

FIG. 15 is a schematic block diagram of a network device according to an embodiment of the present disclosure. The network device may be any of the source cell base stations described above. The network device 1500 in FIG. 15 includes a processing unit 1510.

The processing unit 1510 is configured to release a second Packet Data Convergence Protocol (PDCP) entity. The second PDCP entity is configured for communication between a source cell base station and a terminal device. Time at which the second PDCP entity is released is not earlier than time at which a first PDCP entity is established by the terminal device. The first PDCP entity is configured for communication between the terminal device and a target cell base station.

Optionally, the first PDCP entity is different from the second PDCP entity.

Optionally, the network device further includes a communication unit 1520 configured to transmit a first message to the terminal device. The first message includes configuration information for the first PDCP entity for use by the terminal device to establish the first PDCP entity.

Optionally, the first message includes at least one of a Radio Resource Control (RRC) reconfiguration message and a handover command.

Optionally, a context in the first PDCP entity is determined according to a context in the second PDCP entity.

Optionally, the network device further includes a communication unit 1520 configured to transmit first indication information to the terminal device. The first indication information indicates that a PDCP context in the first PDCP entity is determined based on a PDCP context in the second PDCP entity.

Optionally, the PDCP context includes at least one of: an uplink PDCP sequence number, an uplink superframe number, a downlink PDCP sequence number, and a downlink superframe number.

Optionally, a security key in the first PDCP entity and a security key in the second PDCP entity are different, and/or a Robust Header Compression (ROHC) configuration in the first PDCP entity and an ROHC configuration in the second PDCP entity are different.

Optionally, the first PDCP entity includes one or more parameters in the second PDCP entity, and the first PDCP entity is further configured for communication between the terminal device and the source cell base station.

Optionally, the first PDCP entity is obtained by the terminal device adding a first parameter to the second PDCP entity. The first parameter is used for communication between the terminal device and the target cell base station. The processing unit 1510 is configured to release a second parameter in the second PDCP entity. The second parameter is used for communication between the terminal device and the source cell base station. Time at which the second parameter is released is not earlier than time at which the first parameter is added by the terminal device. The first parameter is different from the second parameter.

Optionally, each of the first parameter and the second parameter includes at least one of a security key and a Robust Header Compression (ROHC) configuration.

Optionally, the processing unit 1510 is further configured to maintain a connection with the terminal device while the terminal device is establishing the first PDCP entity.

Optionally, the processing unit 1510 is configured to release the second PDCP entity when random access to the target cell base station has succeeded.

Optionally, the processing unit 1510 is further configured to maintain a connection with the terminal device while the terminal device is performing the random access to the target cell base station.

Optionally, the network device further includes a communication unit 1520 configured to transmit a handover command to the terminal device. The handover command instructs the terminal device to switch to the target cell base station.

FIG. 16 is a schematic block diagram of a network device according to an embodiment of the present disclosure. The network device may be any of the target cell base stations described above. The network device 1600 in FIG. 16 includes a processing unit 1610.

The processing unit 1610 is configured to establish a first Packet Data Convergence Protocol (PDCP) entity. The first PDCP entity is configured for communication between a target cell base station and a terminal device. Time at which the first PDCP entity is established is not later than time at which a second PDCP entity is released by the terminal device. The second PDCP entity is configured for communication between the terminal device and a source cell base station.

Optionally, the first PDCP entity is different from the second PDCP entity.

Optionally, the network device further includes a communication unit 1620 configured to receive a first message transmitted by the source cell base station. The first message includes configuration information for the first PDCP entity. The processing unit 1610 is configured to establish the first PDCP entity according to the configuration information for the first PDCP entity.

Optionally, the first message includes a handover request message.

Optionally, a context in the first PDCP entity is determined according to a context in the second PDCP entity.

Optionally, the network device further includes a communication unit 1620 configured to receive first indication information transmitted by the source cell base station. The first indication information indicates that a PDCP context in the first PDCP entity is determined based on a PDCP context in the second PDCP entity.

Optionally, the PDCP context includes at least one of: an uplink PDCP sequence number, an uplink superframe number, a downlink PDCP sequence number, and a downlink superframe number.

Optionally, a security key in the first PDCP entity and a security key in the second PDCP entity are different, and/or a Robust Header Compression (ROHC) configuration in the first PDCP entity and an ROHC configuration in the second PDCP entity are different.

Optionally, the first PDCP entity includes one or more parameters in the second PDCP entity.

Optionally, the one or more parameters in the second PDCP entity include a second parameter used for communication between the terminal device and the source cell base station. The first PDCP entity is obtained by adding a first parameter to the second PDCP entity. The first parameter is used for communication between the target cell base station and the terminal device. Time at which the first parameter is added is not later than time at which the second parameter is released by the terminal device. The first parameter is different from the second parameter.

Optionally, each of the first parameter and the second parameter includes at least one of a security key and a Robust Header Compression (ROHC) configuration.

Optionally, the time at which the first PDCP entity is established includes at least one of: when a second message is transmitted to the source cell base station, when a message in a random access process is received, when a message in the random access process is transmitted, and when a specific timer expires.

Optionally, the second message includes a handover request confirmation message.

Optionally, the specific timer is a timer that is started after the target cell base station transmits a handover request confirmation message to the source cell base station.

Optionally, the processing unit 1610 is configured to generate the first PDCP entity based on the second PDCP entity when random access of the terminal device has succeeded.

Optionally, before generating the first PDCP entity based on the second PDCP entity, the network device further includes a communication unit configured to transmitting a third message to the terminal device. The third message includes at least one of: a Random Access Response (RAR) message and a contention resolution message.

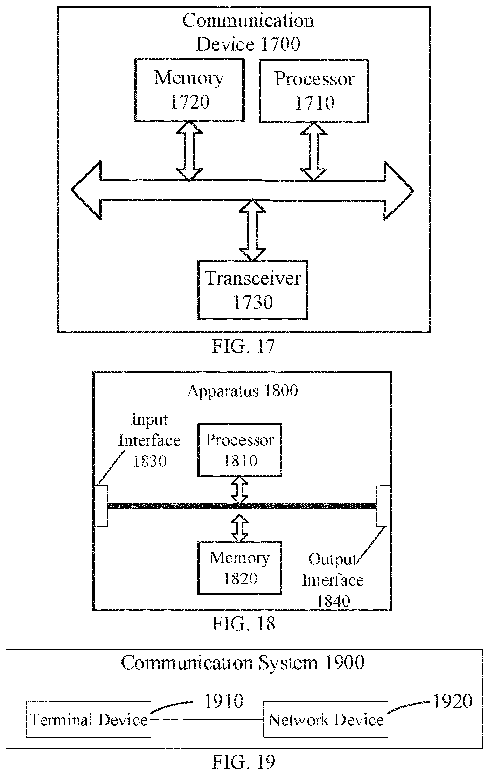

FIG. 17 is a schematic diagram showing a structure of a communication device 1700 according to an embodiment of the present disclosure. The communication device 1700 shown in FIG. 17 includes a processor 1710, and the processor 1710 can invoke and execute a computer program from a memory to perform the method according to any of the embodiments of the present disclosure.

Optionally, as shown in FIG. 17, the communication device 1700 may further include a memory 1720. The processor 1710 can invoke and execute a computer program from the memory 1720 to perform the method according to any of the embodiments of the present disclosure.

The memory 1720 may be a separate device independent of the processor 1710, or may be integrated in the processor 1710.

Optionally, as shown in FIG. 17, the communication device 1700 may further include a transceiver 1730. The processor 1710 can control the transceiver 1730 to communicate with other devices, and in particular to transmit information or data to other devices or receive information or data transmitted by other devices.

Here, the transceiver 1730 may include a transmitter and a receiver. The transceiver 1730 may further include one or more antennas.

Optionally, the communication device 1700 may be the network device in the embodiment of the present disclosure, and the communication device 1700 can perform corresponding procedures implemented by the network device in the method according to any of the embodiments of the present disclosure. Details thereof will be omitted here for simplicity.

Optionally, the communication device 1700 may be the mobile terminal/terminal device in the embodiment of the present disclosure, and the communication device 1700 can perform corresponding procedures implemented by the mobile terminal/terminal device in the method according to any of the embodiments of the present disclosure. Details thereof will be omitted here for simplicity.

FIG. 18 is a schematic diagram showing a structure of an apparatus according to an embodiment of the present disclosure. The apparatus 1800 shown in FIG. 18 includes a processor 1810, and the processor 1810 can invoke and run a computer program from a memory to implement the method in the embodiment of the present disclosure.

Optionally, as shown in FIG. 18, the apparatus 1800 may further include a memory 1820. The processor 1810 can invoke and run a computer program from the memory 1820 to implement the method in the embodiment of the present disclosure.

The memory 1820 may be a separate device independent from the processor 1810, or may be integrated in the processor 1810.

Optionally, the apparatus 1800 may further include an input interface 1830. The processor 1810 can control the input interface 1830 to communicate with other devices or chips, and in particular, obtain information or data transmitted by other devices or chips.

Optionally, the apparatus 1800 may further include an output interface 1840. The processor 1810 can control the output interface 1840 to communicate with other devices or chips, and in particular, output information or data to other devices or chips.

Optionally, the apparatus can be applied to the network device in the embodiment of the present disclosure, and the apparatus can implement the corresponding processes implemented by the network device in the various methods of the embodiments of the present disclosure. For the sake of brevity, details thereof will be omitted here.

Optionally, the apparatus can be applied to the mobile terminal/terminal device in the embodiment of the present disclosure, and the apparatus can implement the corresponding process implemented by the mobile terminal/terminal device in each method of the embodiment of the present disclosure. For the sake of brevity, details thereof will be omitted here.

It can be appreciated that the apparatus in the embodiment of the present disclosure may be a chip, and the chip may also be referred to as a system-level chip, a system-chip, a chip system, or a system-on-chip.

FIG. 19 is a schematic block diagram of a communication system 1900 according to an embodiment of the present disclosure. As shown in FIG. 19, the communication system 1900 includes a terminal device 1910 and a network device 1920.

Here, the terminal device 1910 can be configured to implement the corresponding functions implemented by the terminal device in the above method, and the network device 1920 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a transitory memory or a non-transitory memory, or may include both transitory and non-transitory memories. Here, the non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM), which is used as an external cache. As illustrative, rather than limiting, many forms of RAMs are available, including for example Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer-readable storage medium storing a computer program.

Optionally, the computer-readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer-readable storage medium can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

Optionally, the computer program product can be applied to the mobile terminal/terminal device in the embodiment of the present disclosure, and the computer program instructions can cause a computer to perform corresponding procedures implemented by the mobile terminal/terminal device in the method according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

Optionally, the computer program can be applied to the mobile terminal/terminal device in the embodiment of the present disclosure. The computer program, when executed on a computer, can cause the computer to perform corresponding procedures implemented by the mobile terminal/terminal device in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer-readable storage medium. Based on this understanding, all or part of the technical solutions according to the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include various mediums capable of storing program codes, such as a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the protect scope of the present disclosure is not limited to these embodiments. Various variants and alternatives can be easily conceived by any of those skilled in the art without departing from the technical scope of the present disclosure. Therefore, these variants and alternatives are to be encompassed by the protect scope of present disclosure as defined by the claims as attached.

## Claims

1. A method for cell handover, comprising:
establishing a first Packet Data Convergence Protocol (PDCP) entity, the first PDCP entity being configured for communication between a terminal device and a target cell base station; and
releasing a second PDCP entity, the second PDCP entity being configured for communication between the terminal device and a source cell base station, wherein time at which the second PDCP entity is released is not earlier than time at which the first PDCP entity is established.

2. The method according to claim 1, wherein the first PDCP entity is different from the second PDCP entity.

3. The method according to claim 1 or 2, further comprising:
receiving a first message transmitted by the source cell base station, the first message comprising configuration information for the first PDCP entity,
wherein said establishing the first PDCP entity comprises:
establishing the first PDCP entity according to the configuration information for the first PDCP entity.

4. The method according to claim 3, wherein the first message comprises at least one of a Radio Resource Control (RRC) reconfiguration message and a handover command.

5. The method according to any one of claims 1-4, wherein a context in the first PDCP entity is determined according to a context in the second PDCP entity.

6. The method according to claim 5, further comprising:
receiving first indication information transmitted by the source cell base station, the first indication information indicating that a PDCP context in the first PDCP entity is determined based on a PDCP context in the second PDCP entity.

7. The method according to claim 6, wherein the PDCP context comprises at least one of: an uplink PDCP sequence number, an uplink superframe number, a downlink PDCP sequence number, and a downlink superframe number.

8. The method according to any one of claims 1-7, wherein a security key in the first PDCP entity and a security key in the second PDCP entity are different, and/or a Robust Header Compression (ROHC) configuration in the first PDCP entity and an ROHC configuration in the second PDCP entity are different.

9. The method according to claim 1, wherein the first PDCP entity comprises one or more parameters in the second PDCP entity, and the first PDCP entity is further configured for communication between the terminal device and the source cell base station.

10. The method according to claim 9, wherein the first PDCP entity is obtained by adding a first parameter to the second PDCP entity, the first parameter being used for communication between the terminal device and the target cell base station, and
said releasing the second PDCP entity comprises:
releasing a second parameter in the second PDCP entity, the second parameter being used for communication between the terminal device and the source cell base station, wherein time at which the second parameter is released is not earlier than time at which the first parameter is added, the first parameter being different from the second parameter.

11. The method according to claim 10, wherein each of the first parameter and the second parameter comprises at least one of a security key and a Robust Header Compression (ROHC) configuration.

12. The method according to any one of claims 1-11, wherein the time at which the first PDCP entity is established comprises at least one of: when a second message transmitted by the source cell base station is received, when a message in a random access process is received, when a message in the random access process is transmitted, and when a specific timer expires.

13. The method according to claim 12, wherein the second message comprises a handover command.

14. The method according to claim 12 or 13, wherein the specific timer is a timer that is started after the terminal device receives a handover command transmitted by the source cell base station.

15. The method according to any one of claims 1-14, further comprising:
maintaining a connection with the source cell base station while establishing the first PDCP entity.

16. The method according to claim 1, wherein said establishing the first PDCP entity comprises:
generating the first PDCP entity based on the second PDCP entity when random access to the target cell base station has succeeded.

17. The method according to claim 16, further comprising, prior to said generating the first PDCP entity based on the second PDCP entity:
receiving a third message transmitted by the target cell base station, the third message comprising at least one of a Random Access Response (RAR) message and a contention resolution message.

18. The method according to claim 16 or 17, further comprising:
maintaining a connection with the source cell base station while performing the random access to the target cell base station.

19. The method according to any one of claims 1-18, further comprising:
retransmitting data and/or transmitting a status report via the first PDCP entity after the first PDCP entity is established or the second PDCP entity is released.

20. The method according to any one of claims 1-19, further comprising:
receiving a handover command transmitted by the source cell base station, the handover command instructing the terminal device to switch to the target cell base station.

21. A method for cell handover, comprising:
releasing a second Packet Data Convergence Protocol (PDCP) entity, the second PDCP entity being configured for communication between a source cell base station and a terminal device, wherein time at which the second PDCP entity is released is not earlier than time at which a first PDCP entity is established by the terminal device, the first PDCP entity being configured for communication between the terminal device and a target cell base station.

22. The method according to claim 21, wherein the first PDCP entity is different from the second PDCP entity.

23. The method according to claim 21 or 22, further comprising:
transmitting a first message to the terminal device, the first message comprising configuration information for the first PDCP entity for use by the terminal device to establish the first PDCP entity.

24. The method according to claim 23, wherein the first message comprises at least one of a Radio Resource Control (RRC) reconfiguration message and a handover command.

25. The method according to any one of claims 21-24, wherein a context in the first PDCP entity is determined according to a context in the second PDCP entity.

26. The method according to claim 25, further comprising:
transmitting first indication information to the terminal device, the first indication information indicating that a PDCP context in the first PDCP entity is determined based on a PDCP context in the second PDCP entity.

27. The method according to claim 26, wherein the PDCP context comprises at least one of: an uplink PDCP sequence number, an uplink superframe number, a downlink PDCP sequence number, and a downlink superframe number.

28. The method according to any one of claims 21-27, wherein a security key in the first PDCP entity and a security key in the second PDCP entity are different, and/or a Robust Header Compression (ROHC) configuration in the first PDCP entity and an ROHC configuration in the second PDCP entity are different.

29. The method according to claim 21, wherein the first PDCP entity comprises one or more parameters in the second PDCP entity, and the first PDCP entity is further configured for communication between the source cell base station and the terminal device.

30. The method according to claim 29, wherein the first PDCP entity is obtained by the terminal device adding a first parameter to the second PDCP entity, the first parameter being used for communication between the terminal device and the target cell base station, and
said releasing the second PDCP entity comprises:
releasing a second parameter in the second PDCP entity, the second parameter being used for communication between the terminal device and the source cell base station, wherein time at which the second parameter is released is not earlier than time at which the first parameter is added by the terminal device, the first parameter being different from the second parameter.

31. The method according to claim 30, wherein each of the first parameter and the second parameter comprises at least one of a security key and a Robust Header Compression (ROHC) configuration.

32. The method according to any one of claims 21-31, further comprising:
maintaining a connection with the terminal device while the terminal device is establishing the first PDCP entity.

33. The method according to claim 21, wherein said releasing the second PDCP entity comprises:
releasing the second PDCP entity when random access to the target cell base station has succeeded.

34. The method according to claim 33, further comprising:
maintaining a connection with the terminal device while the terminal device is performing the random access to the target cell base station.

35. The method according to any one of claims 21-34, further comprising:
transmitting a handover command to the terminal device, the handover command instructing the terminal device to switch to the target cell base station.

36. A method for cell handover, comprising:
establishing a first Packet Data Convergence Protocol (PDCP) entity, the first PDCP entity being configured for communication between a target cell base station and a terminal device, wherein time at which the first PDCP entity is established is not later than time at which a second PDCP entity is released by the terminal device, the second PDCP entity being configured for communication between the terminal device and a source cell base station.

37. The method according to claim 36, wherein the first PDCP entity is different from the second PDCP entity.

38. The method according to claim 36 or 37, further comprising:
receiving a first message transmitted by the source cell base station, the first message comprising configuration information for the first PDCP entity,
wherein said establishing the first PDCP entity comprises:
establishing the first PDCP entity according to the configuration information for the first PDCP entity.

39. The method according to claim 38, wherein the first message comprises a handover request message.

40. The method according to any one of claims 36-39, wherein a context in the first PDCP entity is determined according to a context in the second PDCP entity.

41. The method according to claim 40, further comprising:
receiving first indication information transmitted by the source cell base station, the first indication information indicating that a PDCP context in the first PDCP entity is determined based on a PDCP context in the second PDCP entity.

42. The method according to claim 41, wherein the PDCP context comprises at least one of: an uplink PDCP sequence number, an uplink superframe number, a downlink PDCP sequence number, and a downlink superframe number.

43. The method according to any one of claims 36-42, wherein a security key in the first PDCP entity and a security key in the second PDCP entity are different, and/or a Robust Header Compression (ROHC) configuration in the first PDCP entity and an ROHC configuration in the second PDCP entity are different.

44. The method according to claim 36, wherein the first PDCP entity comprises one or more parameters in the second PDCP entity.

45. The method according to claim 44, wherein the one or more parameters in the second PDCP entity comprise a second parameter used for communication between the terminal device and the source cell base station, the first PDCP entity is obtained by adding a first parameter to the second PDCP entity, the first parameter is used for communication between the target cell base station and the terminal device, time at which the first parameter is added is not later than time at which the second parameter is released by the terminal device, and the first parameter is different from the second parameter.

46. The method according to claim 45, wherein each of the first parameter and the second parameter comprises at least one of a security key and a Robust Header Compression (ROHC) configuration.

47. The method according to any one of claims 36-46, wherein the time at which the first PDCP entity is established comprises at least one of: when a second message is transmitted to the source cell base station, when a message in a random access process is received, when a message in the random access process is transmitted, and when a specific timer expires.

48. The method according to claim 47, wherein the second message comprises a handover request confirmation message.

49. The method according to claim 47 or 48, wherein the specific timer is a timer that is started after the target cell base station transmits a handover request confirmation message to the source cell base station.

50. The method according to claim 36, wherein said establishing the first PDCP entity comprises:
generating the first PDCP entity based on the second PDCP entity when random access of the terminal device has succeeded.

51. The method according to claim 50, further comprising, prior to said generating the first PDCP entity based on the second PDCP entity:
transmitting a third message to the terminal device, the third message comprising at least one of a Random Access Response (RAR) message and a contention resolution message.

52. The method according to any one of claims 36-51, further comprising:
receiving retransmitted data and/or a status report transmitted by the terminal device via the first PDCP entity after the first PDCP entity is established.

53. A terminal device, comprising a processing unit configured to:
establish a first Packet Data Convergence Protocol (PDCP) entity, the first PDCP entity being configured for communication between a terminal device and a target cell base station; and
release a second PDCP entity, the second PDCP entity being configured for communication between the terminal device and a source cell base station, wherein time at which the second PDCP entity is released is not earlier than time at which the first PDCP entity is established.

54. The terminal device according to claim 53, wherein the first PDCP entity is different from the second PDCP entity.

55. The terminal device according to claim 53 or 54, further comprising a communication unit configured to receive a first message transmitted by the source cell base station, the first message comprising configuration information for the first PDCP entity,
wherein the processing unit is configured to establish the first PDCP entity according to the configuration information for the first PDCP entity.

56. The terminal device according to claim 55, wherein the first message comprises at least one of a Radio Resource Control (RRC) reconfiguration message and a handover command.

57. The terminal device according to any one of claims 53-56, wherein a context in the first PDCP entity is determined according to a context in the second PDCP entity.

58. The terminal device according to claim 57, further comprising a communication unit configured to receive first indication information transmitted by the source cell base station, the first indication information indicating that a PDCP context in the first PDCP entity is determined based on a PDCP context in the second PDCP entity.

59. The terminal device according to claim 58, wherein the PDCP context comprises at least one of: an uplink PDCP sequence number, an uplink superframe number, a downlink PDCP sequence number, and a downlink superframe number.

60. The terminal device according to any one of claims 53-59, wherein a security key in the first PDCP entity and a security key in the second PDCP entity are different, and/or a Robust Header Compression (ROHC) configuration in the first PDCP entity and an ROHC configuration in the second PDCP entity are different.

61. The terminal device according to claim 53, wherein the first PDCP entity comprises one or more parameters in the second PDCP entity, and the first PDCP entity is further configured for communication between the terminal device and the source cell base station.

62. The terminal device according to claim 61, wherein the first PDCP entity is obtained by adding a first parameter to the second PDCP entity, the first parameter being used for communication between the terminal device and the target cell base station, and
the processing unit is configured to release a second parameter in the second PDCP entity, the second parameter being used for communication between the terminal device and the source cell base station, wherein time at which the second parameter is released is not earlier than time at which the first parameter is added, the first parameter being different from the second parameter.

63. The terminal device according to claim 62, wherein each of the first parameter and the second parameter comprises at least one of a security key and a Robust Header Compression (ROHC) configuration.

64. The terminal device according to any one of claims 53-63, wherein the time at which the first PDCP entity is established comprises at least one of: when a second message transmitted by the source cell base station is received, when a message in a random access process is received, when a message in the random access process is transmitted, and when a specific timer expires.

65. The terminal device according to claim 64, wherein the second message comprises a handover command.

66. The terminal device according to claim 64 or 65, wherein the specific timer is a timer that is started after the terminal device receives a handover command transmitted by the source cell base station.

67. The terminal device according to any one of claims 53-66, wherein the processing unit is further configured to maintain a connection with the source cell base station while establishing the first PDCP entity.

68. The terminal device according to claim 53, wherein the processing unit is configured to generate the first PDCP entity based on the second PDCP entity when random access to the target cell base station has succeeded.

69. The terminal device according to claim 68, further comprising a communication unit configured to receive a third message transmitted by the source cell base station, the third message comprising at least one of a Random Access Response (RAR) message and a contention resolution message.

70. The terminal device according to claim 68 or 69, wherein the processing unit is further configured to maintain a connection with the source cell base station while performing the random access to the target cell base station.

71. The terminal device according to any one of claims 53-70, further comprising a communication unit configured to retransmit data and/or transmit a status report via the first PDCP entity after the first PDCP entity is established or the second PDCP entity is released.

72. The terminal device according to any one of claims 53-71, further comprising a communication unit configured to receive a handover command transmitted by the source cell base station, the handover command instructing the terminal device to switch to the target cell base station.

73. A network device, wherein the network device is a source cell base station and comprises a processing unit configured to:
release a second Packet Data Convergence Protocol (PDCP) entity, the second PDCP entity being configured for communication between a source cell base station and a terminal device, wherein time at which the second PDCP entity is released is not earlier than time at which a first PDCP entity is established by the terminal device, the first PDCP entity being configured for communication between the terminal device and a target cell base station.

74. The network device according to claim 73, wherein the first PDCP entity is different from the second PDCP entity.

75. The network device according to claim 73 or 74, further comprising a communication unit configured to transmit a first message to the terminal device, the first message comprising configuration information for the first PDCP entity for use by the terminal device to establish the first PDCP entity.

76. The network device according to claim 75, wherein the first message comprises at least one of a Radio Resource Control (RRC) reconfiguration message and a handover command.

77. The network device according to any one of claims 73-76, wherein a context in the first PDCP entity is determined according to a context in the second PDCP entity.

78. The network device according to claim 77, further comprising a communication unit configured to transmit first indication information to the terminal device, the first indication information indicating that a PDCP context in the first PDCP entity is determined based on a PDCP context in the second PDCP entity.

79. The network device according to claim 78, wherein the PDCP context comprises at least one of: an uplink PDCP sequence number, an uplink superframe number, a downlink PDCP sequence number, and a downlink superframe number.

80. The network device according to any one of claims 73-79, wherein a security key in the first PDCP entity and a security key in the second PDCP entity are different, and/or a Robust Header Compression (ROHC) configuration in the first PDCP entity and an ROHC configuration in the second PDCP entity are different.

81. The network device according to claim 80, wherein the first PDCP entity comprises one or more parameters in the second PDCP entity, and the first PDCP entity is further configured for communication between the source cell base station and the terminal device.

82. The network device according to claim 81, wherein the first PDCP entity is obtained by the terminal device adding a first parameter to the second PDCP entity, the first parameter being used for communication between the terminal device and the target cell base station, and
the processing unit is configured to release a second parameter in the second PDCP entity, the second parameter being used for communication between the terminal device and the source cell base station, wherein time at which the second parameter is released is not earlier than time at which the first parameter is added by the terminal device, the first parameter being different from the second parameter.

83. The network device according to claim 82, wherein each of the first parameter and the second parameter comprises at least one of a security key and a Robust Header Compression (ROHC) configuration.

84. The network device according to any one of claims 73-83, wherein the processing unit is further configured to maintain a connection with the terminal device while the terminal device is establishing the first PDCP entity.

85. The network device according to claim 84, wherein the processing unit is configured to release the second PDCP entity when random access to the target cell base station has succeeded.

86. The network device according to claim 84 or 85, wherein the processing unit is further configured to maintain a connection with the terminal device while the terminal device is performing the random access to the target cell base station.

87. The network device according to any one of claims 73-86, further comprising a communication unit configured to transmit a handover command to the terminal device, the handover command instructing the terminal device to switch to the target cell base station.

88. A network device, wherein the network device is a target cell base station, and the network device comprises a processing unit configured to:
establish a first Packet Data Convergence Protocol (PDCP) entity, the first PDCP entity being configured for communication between a target cell base station and a terminal device, wherein time at which the first PDCP entity is established is not later than time at which a second PDCP entity is released by the terminal device, the second PDCP entity being configured for communication between the terminal device and a source cell base station.

89. The network device according to claim 88, wherein the first PDCP entity is different from the second PDCP entity.

90. The network device according to claim 88 or 89, further comprising a communication unit configured to receive a first message transmitted by the source cell base station, the first message comprising configuration information for the first PDCP entity,
wherein the processing unit is configured to establish the first PDCP entity according to the configuration information for the first PDCP entity.

91. The network device according to claim 90, wherein the first message comprises a handover request message.

92. The network device according to any one of claims 88-91, wherein a context in the first PDCP entity is determined according to a context in the second PDCP entity.

93. The network device according to claim 92, further comprising a communication unit configured to receive first indication information transmitted by the source cell base station, the first indication information indicating that a PDCP context in the first PDCP entity is determined based on a PDCP context in the second PDCP entity.

94. The network device according to claim 93, wherein the PDCP context comprises at least one of: an uplink PDCP sequence number, an uplink superframe number, a downlink PDCP sequence number, and a downlink superframe number.

95. The network device according to any one of claims 88-94, wherein a security key in the first PDCP entity and a security key in the second PDCP entity are different, and/or a Robust Header Compression (ROHC) configuration in the first PDCP entity and an ROHC configuration in the second PDCP entity are different.

96. The network device according to claim 95, wherein the first PDCP entity comprises one or more parameters in the second PDCP entity.

97. The network device according to claim 96, wherein the one or more parameters in the second PDCP entity comprise a second parameter used for communication between the terminal device and the source cell base station, the first PDCP entity is obtained by adding a first parameter to the second PDCP entity, the first parameter is used for communication between the target cell base station and the terminal device, time at which the first parameter is added is not later than time at which the second parameter is released by the terminal device, and the first parameter is different from the second parameter.

98. The network device according to claim 97, wherein each of the first parameter and the second parameter comprises at least one of a security key and a Robust Header Compression (ROHC) configuration.

99. The network device according to any one of claims 88-98, wherein the time at which the first PDCP entity is established comprises at least one of: when a second message is transmitted to the source cell base station, when a message in a random access process is received, when a message in the random access process is transmitted, and when a specific timer expires.

100. The network device according to claim 99, wherein the second message comprises a handover request confirmation message.

101. The network device according to claim 99 or 100, wherein the specific timer is a timer that is started after the target cell base station transmits a handover request confirmation message to the source cell base station.

102. The network device according to claim 101, wherein the processing unit is configured to generate the first PDCP entity based on the second PDCP entity when random access of the terminal device has succeeded.

103. The network device according to claim 102, further comprising, prior to said generating the first PDCP entity based on the second PDCP entity:
transmitting a third message to the terminal device, the third message comprising at least one of a Random Access Response (RAR) message and a contention resolution message.

104. The network device according to any one of claims 88-103, further comprising a communication unit configured to receive retransmitted data and/or a status report transmitted by the terminal device via the first PDCP entity after the first PDCP entity is established.

105. A terminal device, comprising a processor and a memory, wherein the memory is configured to store a computer program, and the processor is configured to invoke and execute the computer program stored in the memory to perform the method according to any of claims 1 to 20.

106. A network device, comprising a processor and a memory, wherein the memory is configured to store a computer program, and the processor is configured to invoke and execute the computer program stored in the memory to perform the method according to any of claims 21 to 35.

107. A network device, comprising a processor and a memory, wherein the memory is configured to store a computer program, and the processor is configured to invoke and execute the computer program stored in the memory to perform the method according to any of claims 36 to 52.

108. An apparatus, comprising a processor configured to invoke and execute a computer program from a memory, to cause a device provided with the apparatus to perform the method according to any of claims 1 to 20.

109. An apparatus, comprising a processor configured to invoke and execute a computer program from a memory, to cause a device provided with the apparatus to perform the method according to any of claims 21 to 35.

110. An apparatus, comprising a processor configured to invoke and execute a computer program from a memory, to cause a device provided with the apparatus to perform the method according to any of claims 36 to 52.

111. A computer-readable storage medium, storing a computer program configured to cause a computer to perform the method according to any of claims 1 to 20.

112. A computer-readable storage medium, storing a computer program configured to cause a computer to perform the method according to any of claims 21 to 35.

113. A computer-readable storage medium, storing a computer program configured to cause a computer to perform the method according to any of claims 36 to 52.

114. A computer program product, comprising computer program instructions configured to cause a computer to perform the method according to any of claims 1 to 20.

115. A computer program product, comprising computer program instructions configured to cause a computer to perform the method according to any of claims 21 to 35.

116. A computer program product, comprising computer program instructions configured to cause a computer to perform the method according to any of claims 36 to 52.

117. A computer program, configured to cause a computer to perform the method according to any of claims 1 to 20.

118. A computer program, configured to cause a computer to perform the method according to any of claims 21 to 35.

119. A computer program, configured to cause a computer to perform the method according to any of claims 36 to 52.
